# EUROPEAN PATENT APPLICATION

(11) **EP 2 701 313 A1**
(43) Date of publication of application: **26.02.2014**
(21) Application number: 11863824.6
(22) Date of filing: 05.07.2011
(51) Int. Cl.: H04B 1/40

(54) **METHOD FOR PAIRING BLUETOOTH ACCESSORY WITH BLUETOOTH DEVICE, AND BLUETOOTH ACCESSORY**

(30) Priority: 18.04.2011 CN 201110097655
(71) Applicant: ZTE Corporation, Shenzhen, Guangdong 518057 (CN)
(72) Inventor: YANG, Hui, Shenzhen Guangdong 518057 (CN)
(74) Representative: D'Halleweyn, Nele Veerle Trees Gertrudis
(86) International application number: PCT/CN2011/076875
(87) International publication number: WO 2012/142794

(57) **Abstract**

The present invention relates to a method for a Bluetooth accessory pairing with a Bluetooth device, and a Bluetooth accessory, in both of which the Bluetooth accessory can check a pairing list stored in a Bluetooth device; when the pairing list is not empty, the Bluetooth accessory searches for a preset number of Bluetooth devices from the pairing list according to connection priorities of Bluetooth devices and establishes connections with the preset number of Bluetooth devices searched out. The present invention takes the number of times of connections between the Bluetooth device and the Bluetooth accessory as the connection priority, and implements the establishment of a connection between the Bluetooth accessory and the Bluetooth device according to the connection priority, in this way, the Bluetooth accessory can automatically pair with a plurality of Bluetooth devices. In addition, during the search process of the Bluetooth accessory, the Bluetooth accessory can terminate the search at any time according to an external instruction from a user and enter a discoverable mode, so as to pair and establish a connection with a device other than the devices in the pairing list; therefore, the flexibility of pairing is greatly improved, the delay of pairing is reduced and the user experience is improved.

## Description

### Technical Field

The present invention relates to the field of radio communication technologies, and in particular to a method for a Bluetooth accessory pairing with a Bluetooth device, and a Bluetooth accessory.

### Background

At present, Bluetooth devices, such as a cellular phone and an MP3 player having a Bluetooth module, are widely used. Many Bluetooth devices support the use of a Bluetooth accessory. The Bluetooth accessory refers to, for example, a Bluetooth stereo earphone, a vehicle device, an adapter with a Bluetooth capability used for a portable device, a home entertainment device and a Personal Computer (PC), and a Bluetooth speaker system. Many Bluetooth accessories, for example, a Bluetooth stereo earphone, can be coupled with two or more Bluetooth devices simultaneously through different profiles (also referred to as configuration files).

The Bluetooth device can communicate with other devices through a corresponding profile. For example, a Hands Free Profile (HFP) describes how a gateway device is used for a hands-free device to make and answer a call. An Advanced Audio Distribution Profile (A2DP) describes how stereo quality audio is transmitted to the Bluetooth accessory from a media source in a manner of a stream.

When the Bluetooth accessory is coupled with two devices (for example, a cellular phone and a media player) simultaneously using different profiles, a user can listen to music played by the media player using the A2DP before a call is received; when a call is incoming, the Bluetooth accessory can automatically interrupt the playing of the music and can receive or transmit voice information using the HFP when the user is answering the call. After the user completes the call, the Bluetooth accessory can continue to receive the music using the A2DP.

The premise of the Bluetooth accessory receiving or transmitting all kinds of information is that the Bluetooth accessory must pair and establish a connection with the Bluetooth device.

A present method adopted by the Bluetooth accessory for pairing with a plurality of Bluetooth devices includes the following steps. A list of paired devices for the Bluetooth accessory is checked to determine a device paired recently with a specific Bluetooth profile, wherein the Bluetooth profile refers to, for example, HFP or A2DP. If the paired device is found, the Bluetooth accessory attempts to connect with the paired device; otherwise, the Bluetooth accessory continues attempting to connect with another device in the list of paired devices according to a connection priority, till the Bluetooth accessory has two connections with different profiles. If no connection is performed, or the list of paired devices is empty, the Bluetooth device enters a discoverable mode. However, this method has the following disadvantages.
1. The present pairing method preferentially searches and connects with the Bluetooth device last connected according to different profiles. However, according to the usage habits of a user, the Bluetooth device to which the Bluetooth accessory is connected most frequently is the Bluetooth device the user would use most probably next time. When a plurality of Bluetooth devices is paired with a Bluetooth accessory, the pairing process is relatively complex and the user experience is poor.
2. Once electrified, the Bluetooth accessory begins searching according to the pairing condition in the pairing list. The search time lasts for up to 30s-60s, and the Bluetooth accessory can not enter the discoverable mode before the search is ended, thus a long delay is caused. Besides, during the 30s-60s, other Bluetooth devices can not connect with the Bluetooth accessory actively.

### Summary

The present invention provides a method for a Bluetooth accessory pairing with a Bluetooth device, and a Bluetooth accessory, so as to improve the flexibility of the Bluetooth accessory pairing with the Bluetooth device and the user experience.

The technical solution of the present invention is realized as follows.

The present invention provides a method for a Bluetooth accessory pairing with a Bluetooth device, which includes:
when a pairing list aiming at Bluetooth devices is not empty, the Bluetooth accessory searching for a preset number of Bluetooth devices from the pairing list according to connection priorities of Bluetooth devices and establishing connections with the preset number of Bluetooth devices searched out.

In the above, a connection priority of a Bluetooth device is set based on the number of times of establishing a connection of a corresponding profile by the Bluetooth device and the Bluetooth accessory.

In the above, the pairing list at least includes the type of a Bluetooth device, a profile simultaneously supported by the Bluetooth device and the Bluetooth accessory, and the number of times of establishing a connection of a corresponding profile by the Bluetooth device and the Bluetooth accessory.

In the above, the process of the Bluetooth accessory searching for the preset number of Bluetooth devices from the pairing list according to the connection priorities of the Bluetooth devices and establishing the connections with the preset number of Bluetooth devices searched out includes:
the Bluetooth accessory searching for a Bluetooth device with maximum connection times from the pairing list and establishing a connection of a corresponding profile with the Bluetooth device with the maximum connection times;
searching for a Bluetooth device with second maximum connection times from the pairing list;
when the Bluetooth device with the second maximum connection times has not established a connection with the Bluetooth accessory and a profile corresponding to the second maximum connection times indicates that no connection has been established, the Bluetooth accessory establishing a connection of the corresponding profile with the Bluetooth device with the second maximum connection times; searching for a Bluetooth device with next maximum connection times from the pairing list and establishing a connection of a corresponding profile with the Bluetooth device searched out till the preset number of Bluetooth devices are searched out.

In the above, the preset number includes the number of types of profiles simultaneously supported by a Bluetooth device and the Bluetooth accessory, and the preset number is equal to or larger than 2.

In the above, the method further includes:
when the pairing list is empty or the Bluetooth accessory fails in searching out the preset number of Bluetooth devices for establishing the connections, entering a discoverable mode;
monitoring, in the discoverable mode, query information from a Bluetooth device other than Bluetooth devices in the pairing list;
sending a response message to the Bluetooth device other than the Bluetooth devices in the pairing list according to the query information, to indicate to pair and establish a connection with the Bluetooth device other than the Bluetooth devices in the pairing list.

In the above, the method further including: during the process of the Bluetooth accessory searching for the preset number of Bluetooth devices from the pairing list, when the Bluetooth accessory receives a search termination instruction input from external, the Bluetooth accessory terminating the search, entering a discoverable mode and monitoring query information from a Bluetooth device other than Bluetooth devices in the pairing list;
sending a response message to the Bluetooth device other than the Bluetooth devices in the pairing list according to the query information to pair and establish a connection with the Bluetooth device other than the Bluetooth devices in the pairing list.

The present invention also provides a Bluetooth accessory for pairing with a Bluetooth device, the Bluetooth accessory includes:
a pairing list checking module, configured to check a pairing list stored in a Bluetooth device;
a connection establishment module configured to, when the pairing list is not empty, search for a preset number of Bluetooth devices from the pairing list according to connection priorities of Bluetooth devices and establish connections with the preset number of Bluetooth devices searched out.

In the above, the connection priority of a Bluetooth device is set based on the number of times of establishing a connection of a corresponding profile by the Bluetooth device and the Bluetooth accessory;
the pairing list at least includes the type of a Bluetooth device, a profile simultaneously supported by the Bluetooth device and the Bluetooth accessory, and the number of times of establishing a connection of a corresponding profile by the Bluetooth device and the Bluetooth accessory.

In the above, when searching for the preset number of Bluetooth devices from the pairing list according to the connection priorities of the Bluetooth devices and establishing the connections with the preset number of Bluetooth devices searched out, the connection establishment module is configured to:
search for a Bluetooth device with maximum connection times from the pairing list and establish a connection of a corresponding profile with the Bluetooth device with the maximum connection times; search for a Bluetooth device with second maximum connection times from the pairing list, and establish a connection of a corresponding profile with the Bluetooth device with the second maximum connection times when the Bluetooth device with the second maximum connection times has not established a connection with the Bluetooth accessory and a profile corresponding to the second maximum connection times indicates that no connection has been established; and search a Bluetooth device with next maximum connection times from the pairing list and establish a connection of a corresponding profile with the Bluetooth device searched out till the preset number of Bluetooth devices are searched out.

In the above, the Bluetooth accessory further includes:
a switching module, configured to enter a discoverable mode when the pairing list is empty or the Bluetooth accessory fails in searching out the preset number of Bluetooth devices for establishing the connections;
a monitoring module, configured to monitor, in the discoverable mode, query information from a Bluetooth device other than Bluetooth devices in the pairing list; and
a response module, configured to send a response message to the Bluetooth device other than the Bluetooth devices in the pairing list according to the query information, to indicate the connection establishment module to pair and establish a connection with the Bluetooth device other than the Bluetooth devices in the pairing list; and
the connection establishment module is further configured to pair and establish the connection with the Bluetooth device other than the Bluetooth devices in the pairing list according to the response message.

In the above, the switching module is further configured to, during the process that the connection establishment module searches for the preset number of Bluetooth devices from the pairing list, receive a search termination instruction input from external and enter the discover mode according to the search termination instruction;
the monitoring module is further configured to monitor, in the discoverable mode, query information from a Bluetooth device other than the Bluetooth devices in the pairing list, when the switching module receives the search termination instruction input from the external;
the response module is further configured to, when the switching module receives the search termination instruction input from the external, send a response message to the Bluetooth device other than the Bluetooth devices in the pairing list according to the query information to indicate the connection establishment module to pair and establish a connection with the Bluetooth device other than the Bluetooth devices in the pairing list;
the connection establishment module is further configured to terminate the search according to the search termination instruction, and pair and establish the connection with the Bluetooth device other than the Bluetooth devices in the pairing list according to the response message.

The method for the Bluetooth accessory pairing with the Bluetooth device, and the Bluetooth accessory provided by the present invention take the number of times of connections between the Bluetooth device and the Bluetooth accessory as the connection priority; after electrified, the Bluetooth accessory searches for a preset number of Bluetooth devices from the pairing list according to the connection priority and establishes connections with the Bluetooth devices searched out. In this way, the Bluetooth accessory can automatically pair with a plurality of Bluetooth devices. Moreover, during the search process performed by the Bluetooth accessory, the Bluetooth accessory can terminate the search at any time according to an external instruction from a user and enter a discoverable mode, so as to pair and establish a connection with a device other than the devices in the pairing list. In this way, the flexibility of pairing is greatly improved, the delay of pairing is reduced and the user experience is improved.

### Brief Description of the Drawings

Fig. 1 is a schematic diagram showing the flow of an embodiment of a method for a Bluetooth accessory pairing with a Bluetooth device according to the present invention;
Fig. 2 is a schematic diagram showing the flow that a Bluetooth accessory searches for a preset number of Bluetooth devices from a pairing list according to connection priorities of Bluetooth devices and establishes connections in an embodiment of a method for a Bluetooth accessory pairing with a Bluetooth device according to the present invention;
Fig. 3 is a schematic diagram showing the flow of another embodiment of a method for a Bluetooth accessory pairing with a Bluetooth device according to the present invention;
Fig. 4 is a schematic diagram showing the structure of an embodiment of a Bluetooth accessory for pairing with a Bluetooth device according to the present invention; and
Fig. 5 is a schematic diagram showing the structure of another embodiment of a Bluetooth accessory for pairing with a Bluetooth device according to the present invention.

### Detailed Description of the Embodiments

The solutions in the embodiments of the present invention mainly is that: the number of times of connections between the Bluetooth device and the Bluetooth accessory is taken as a connection priority; after electrified, the Bluetooth accessory searches for a preset number of Bluetooth devices from a pairing list according to the connection priority and establishes connections with the Bluetooth devices searched out. Moreover, during the search process performed by the Bluetooth accessory, the Bluetooth accessory can terminate the search at any time according to an external instruction from a user and enter a discoverable mode, so as to pair and establish a connection with a device other than the devices in the pairing list, thereby improving the flexibility of pairing and reducing the delay of pairing.

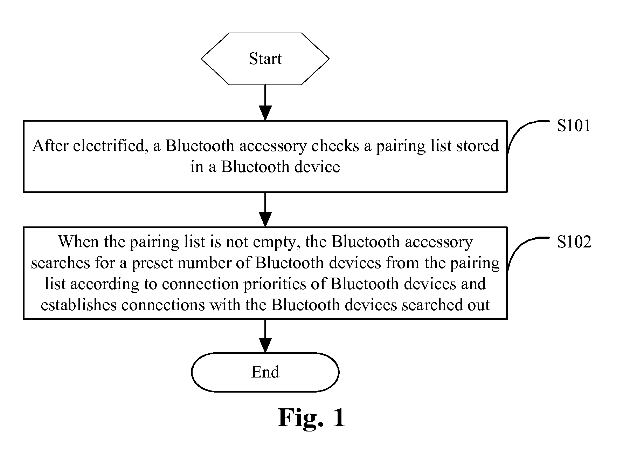

As shown in Fig. 1, an embodiment of the present invention provides a method for a Bluetooth accessory pairing with a Bluetooth device, which includes:
Step S101: after the Bluetooth accessory is electrified, the Bluetooth accessory checks a pairing list stored in a Bluetooth device.
Step S102: when the pairing list is not empty, the Bluetooth accessory searches for a preset number of Bluetooth devices from the pairing list according to connection priorities of Bluetooth devices and establishes connections with the Bluetooth devices searched out.

In the above, a connection priority of a Bluetooth device is set, based on the number of times of establishing a connection of a corresponding profile by the Bluetooth device and the Bluetooth accessory. The greater the number of times is, the higher the connection priority is. The connection times refer to the times of establishing a connection of a corresponding profile type by the Bluetooth accessory and the Bluetooth device.

The pairing list is stored in storage of the Bluetooth device. The pairing list stores information of Bluetooth devices which have established connections with the Bluetooth accessory, wherein the information includes but is not limited to the following device information: the type of the Bluetooth device, the profile simultaneously supported by the Bluetooth device and the Bluetooth accessory, and the number of times of establishing a connection of a corresponding profile by the Bluetooth device and the Bluetooth accessory.

In the pairing list shown in Table 1 as follows, a cellular phone simultaneously supports profiles HFP and A2DP. The Bluetooth accessory has established 50 times of HFP connections and 8 times of A2DP connections with the cellular phone; therefore, the cellular phone appears twice in the pairing list. The Bluetooth accessory has established A2DP connections with an MP3 and a CD player respectively, and has established Dial-up Networking (DUN) connections with a Device 1 and FTP connections with a Device 2. The types of connections the Bluetooth accessory establishes with a device depend on the types of profiles supported by the Bluetooth accessory. Here, it is regulated that the Bluetooth accessory and the Bluetooth device support a plurality of profiles simultaneously.

**Table 1**

| Pairing list | | |
|---|---|---|
| Device | Profile | Connection times |
| Cellular phone | HFP | 50 |
| MP3 | A2DP | 30 |
| CD player | A2DP | 24 |
| Device 1 | DUN | 15 |
| Device 2 | FTP | 10 |
| ...... | ...... | ...... |
| Cellular phone | A2DP | 8 |

According to the usage habits of a user, the Bluetooth device to which the Bluetooth accessory is connected most frequently is the Bluetooth device the user would use most probably next time. Therefore, the connection priority can be sorted according to the connection times, and the Bluetooth accessory preferentially initiates a connection operation to the Bluetooth device with the maximum connection times.

The process of the Bluetooth accessory searching for the preset number of Bluetooth devices from the pairing list according to the connection priorities of the Bluetooth devices and establishing connections with the Bluetooth devices searched out specifically includes: the Bluetooth accessory searches for a Bluetooth device with the highest connection priority from the pairing list; if the Bluetooth device is searched out, the Bluetooth accessory establishes a connection of a corresponding profile with the Bluetooth device searched out; otherwise, the Bluetooth accessory searches for a Bluetooth device with the next highest connection priority from the pairing list and establishes a connection of a corresponding profile with the Bluetooth device searched out till the Bluetooth accessory searches out the preset number of Bluetooth devices and establishes connections of corresponding profiles with the Bluetooth devices searched out.

Taking Table 1 for example, the Bluetooth accessory and the Bluetooth device support profiles HFP and A2DP simultaneously; the Bluetooth accessory predicts the devices to which the user would connect according to the connection times. First, the Bluetooth accessory obtains the device with the maximum connection times (as shown in Table 1, the device is a cellular phone) and searches for this device. If the device is searched out, the Bluetooth accessory determines what type of connection is to be connected with the device according to the type of the device. For example, for the cellular phone, the function mainly is for communications, although the cellular phone simultaneously supports HFP and A2DP, the Bluetooth accessory establishes more HFP connections with the cellular phone than A2DP connections, thus the Bluetooth accessory preferentially establishes an HFP connection with the cellular phone.

After the HFP connection is established, the Bluetooth accessory continues searching for another device which has relatively many connection times and supports other profiles (for example, A2DP). Although the cellular phone supports A2DP, the cellular phone is not in the search range because the Bluetooth accessory has established an HFP connection with the cellular phone. The Bluetooth accessory searches in the devices such as the MP3, the CD player, the Device 1 and the Device 2 to search for the device with the maximum connection times.

According to the rules above, since the Bluetooth accessory establishes more connections with the MP3 than with other devices, the Bluetooth accessory searches for the MP3. If this device is searched out, the Bluetooth accessory establishes a connection of other types (for example, A2DP) with this device. It should be noted that, if the MP3 is the device searched out with the maximum connection times by the Bluetooth accessory in the second search, and the profile corresponding to the MP3 of this connection times is A2DP, since the A2DP has been used to establish a connection by the cellular phone, the Bluetooth accessory can not establish an A2DP connection with the MP3 with the maximum connection times searched out in the second search, but needs to search in the devices with the next level of maximum connection times and takes both the type of the Bluetooth device and the type of the profile as the conditions of judging whether to establish a connection.

In the above, the preset number can be the number of types of profiles simultaneously supported by the Bluetooth device and the Bluetooth accessory. If the Bluetooth accessory has established connections of all profiles supported by the Bluetooth accessory after search, the pairing and connection process is ended. For example, in Table 1, the pairing list includes two types of profiles, namely, HFP and A2DP, the Bluetooth accessory and the Bluetooth device only support these two types of profiles simultaneously, then the pairing and connection process is ended after the Bluetooth accessory establishes connections with the cellular phone and the MP3 respectively after two searches.

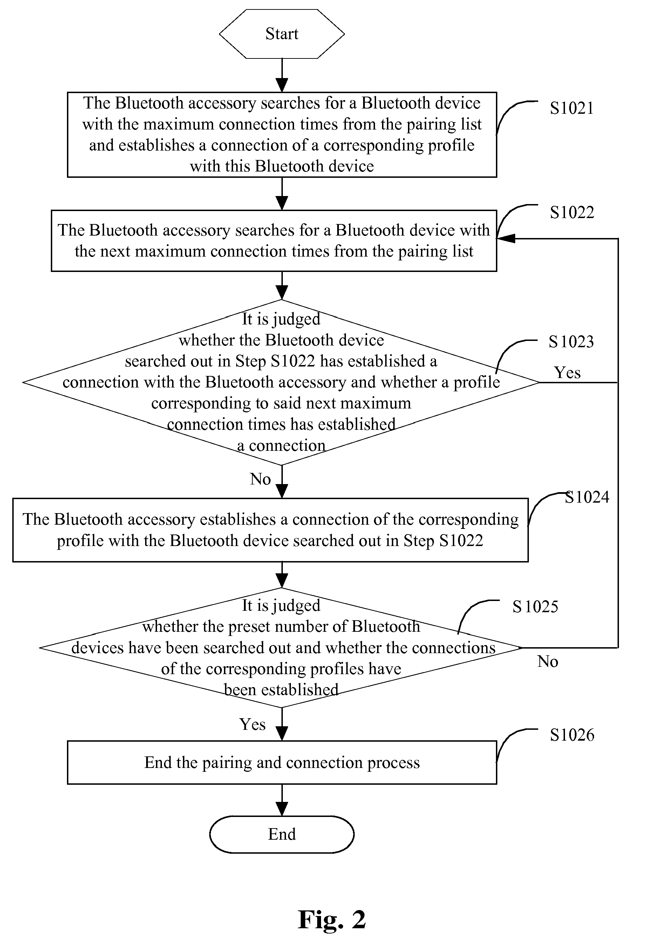

As shown in Fig. 2, the process that the Bluetooth accessory searches for the preset number of Bluetooth devices from the pairing list according to the connection priorities of the Bluetooth devices and establishes connections with the Bluetooth devices searched out in Step S102 includes the following steps.
Step S1021: the Bluetooth accessory searches for a Bluetooth device with the maximum connection times from the pairing list and establishes a connection of a corresponding profile with this Bluetooth device.
Step S1022: the Bluetooth accessory searches for a Bluetooth device with the next maximum connection times from the pairing list.
Step S1023: the Bluetooth accessory judges whether the Bluetooth device searched out in Step S1022 has established a connection with the Bluetooth accessory and meanwhile judges whether a connection has been established based on a profile corresponding to said next maximum connection times; if so, return to Step S1022; otherwise, Step S1024 is executed.
Step S1024: the Bluetooth accessory establishes a connection of the corresponding profile with the Bluetooth device searched out in Step S1022.
Step S1025: It is judged whether the preset number of Bluetooth devices have been searched out and whether the connections of the corresponding profiles have been established; if so, Step S1026 is executed; otherwise, return to Step S1022, till the preset number of Bluetooth devices are searched out, and connections of corresponding profiles are established with the Bluetooth devices searched out.
Step S1026: the pairing and connection process is ended.

The embodiment takes the number of times of connections between the Bluetooth device and the Bluetooth accessory as the connection priority. After electrified, the Bluetooth accessory searches for a preset number of Bluetooth devices from the pairing list according to the connection priority and establishes connections with the Bluetooth devices searched out. In this way, the Bluetooth accessory can automatically pair with a plurality of Bluetooth devices, the flexibility of pairing is improved and the delay of pairing is reduced.

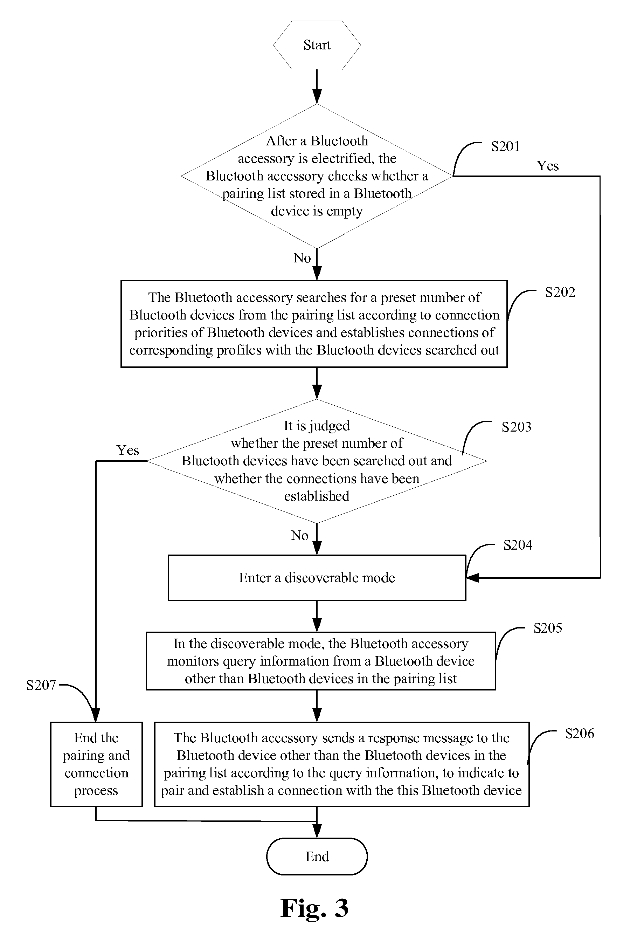

As shown in Fig. 3, another embodiment of the present invention provides a method for a Bluetooth accessory pairing with a Bluetooth device, which includes the following steps.
Step S201: after the Bluetooth accessory is electrified, the Bluetooth accessory checks whether a pairing list stored in a Bluetooth device is empty; if so, Step S204 is executed; otherwise, Step S202 is executed.
Step S202: the Bluetooth accessory searches for a preset number of Bluetooth devices from the pairing list according to connection priorities of Bluetooth devices and establishes connections of corresponding profiles with the Bluetooth devices searched out.
Step S203: It is judged whether the preset number of Bluetooth devices have been searched out and whether the connections have been established; if so, Step S207 is executed; otherwise, Step S204 is executed.
Step S204: the Bluetooth accessory enters a discoverable mode.
Step S205: in the discoverable mode, the Bluetooth accessory monitors query information from a Bluetooth device other than Bluetooth devices in the pairing list.
Step S206: the Bluetooth accessory sends a response message to the Bluetooth device other than the Bluetooth devices in the pairing list according to the query information, to indicate to pair and establish a connection with the this Bluetooth device.
Step S207: the pairing and connection process is ended.

Compared with the foregoing embodiment, this embodiment has a difference as follows. If the Bluetooth accessory can not establish a connection with the Bluetooth device (for example, in the case that the pairing list is empty), or the Bluetooth accessory does not establish the preset number of connections (for example, in the pairing list), the Bluetooth accessory enters a discoverable mode to be discovered by other Bluetooth devices for the subsequent pairing and connection. In the discoverable mode, the Bluetooth accessory monitors query information from other Bluetooth devices and responds to the query information of other Bluetooth devices. The response from the Bluetooth accessory to the query information indicates that the Bluetooth accessory can pair and connect with other Bluetooth devices. In this way, a user using the Bluetooth accessory can automatically pair the Bluetooth accessory with a plurality of Bluetooth devices, without executing the tedious manual pairing process.

Preferably, in this embodiment, during the process that the Bluetooth accessory searches for the Bluetooth devices from the pairing list, when the Bluetooth accessory receives a search termination instruction input from external, the Bluetooth accessory terminates the search and enters a discoverable mode to monitor query information from a Bluetooth device other than the Bluetooth devices in the pairing list; and sends a response message to the Bluetooth device other than the Bluetooth devices in the pairing list according to the query information, so as to pair and establish a connection with this Bluetooth device.

Specifically, for example, during the search process performed by the Bluetooth accessory, the user can execute a preset operation (for example, brief key press operation) to terminate the search process and enable the Bluetooth accessory directly enter the discoverable mode. In this way, other Bluetooth devices can connect to the Bluetooth accessory in real time, thereby avoiding the over long delay.

The preset operation can be set according to a specific Bluetooth accessory, that is, since different Bluetooth accessories have different features, the operation modes of interrupting start-up searching are different too. Examples are provided below for different Bluetooth accessories to illustrate the preset operation mode.

For the condition of the Bluetooth accessory being a Bluetooth stereo earphone, the user can (but not limit to) execute the following operations to interrupt the start-up searching process of the Bluetooth accessory. After the Bluetooth stereo earphone is electrified and started, the user can double click a power button of the earphone to execute the operation of interrupting searching.

For the condition of the Bluetooth accessory being a Bluetooth adapter, the user can (but not limit to) execute the following operations to interrupt the start-up searching process of the Bluetooth accessory. An operation menu item is added in matched software corresponding to the Bluetooth adapter, and the start-up searching process can be interrupted by selecting the menu item. After the Bluetooth adapter is electrified, the user can select the menu item to interrupt the start-up searching process.

For the condition of the Bluetooth accessory being a vehicle device, the user can (but not limit to) execute the following operations to interrupt the start-up searching process of the Bluetooth accessory. After the vehicle device is electrified and started, the user briefly presses a specified button on the vehicle device to execute the operation of interrupting searching.

For the condition of the Bluetooth accessory being a speaker system, the user can (but not limit to) execute the following operations to interrupt the start-up searching process of the Bluetooth accessory. After the Bluetooth speaker system is electrified and started, the user briefly presses a specified button on the speaker system to execute the operation of interrupting searching.

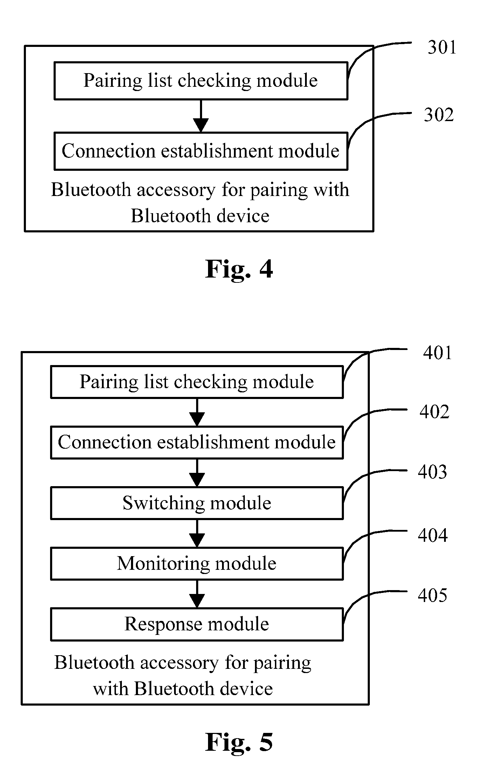

As shown in Fig. 4, an embodiment of the present invention provides a Bluetooth accessory for pairing with a Bluetooth device. The Bluetooth accessory includes: a pairing list checking module 301 and a connection establishment module 302, wherein
the pairing list checking module 301 is configured to check a pairing list stored in a Bluetooth device after the Bluetooth accessory is electrified;
the connection establishment module 302 is configured to search a preset number of Bluetooth devices from the pairing list according to connection priorities of Bluetooth devices when the pairing list is not empty and establish connections with the Bluetooth devices searched out.

In the above, a connection priority of a Bluetooth device is set, based on the number of times of establishing a connection of a corresponding profile by the Bluetooth device and the Bluetooth accessory. The greater the number of times is, the higher the connection priority is. The connection times refer to the times of establishing a connection of a corresponding profile type by the Bluetooth accessory and the Bluetooth device.

The pairing list is stored in storage of the Bluetooth device. The pairing list stores information of Bluetooth devices which have established connections with the Bluetooth accessory, wherein the information includes but is not limited to the following device information: the type of the Bluetooth device, the profile simultaneously supported by the Bluetooth device and the Bluetooth accessory, and the number of times of establishing a connection of a corresponding profile by the Bluetooth device and the Bluetooth accessory.

In the pairing list shown in the above Table 1, a cellular phone simultaneously supports profiles HFP and A2DP. The Bluetooth accessory has established 50 times of HFP connections and 8 times of A2DP connections with the cellular phone; therefore, the cellular phone appears twice in the pairing list. The Bluetooth accessory has established A2DP connections with an MP3 and a CD player respectively, and has established Dial-up Networking (DUN) connections with a Device 1 and FTP connections with a Device 2. The types of connections the Bluetooth accessory establishes with a device depend on the types of profiles supported by the Bluetooth accessory. Here, it is regulated that the Bluetooth accessory and the Bluetooth device support a plurality of profiles simultaneously.

According to the usage habits of a user, the Bluetooth device to which the Bluetooth accessory is connected most frequently is the Bluetooth device the user would use most probably next time. Therefore, the connection priority can be sorted according to the connection times, and the Bluetooth accessory preferentially initiates a connection operation to the Bluetooth device with the maximum connection times.

The process of the Bluetooth accessory searching for the preset number of Bluetooth devices from the pairing list according to the connection priorities of the Bluetooth devices and establishing connections with the Bluetooth devices searched out specifically includes: the Bluetooth accessory searches for a Bluetooth device with the highest connection priority from the pairing list; if the Bluetooth device is searched out, the Bluetooth accessory establishes a connection of a corresponding profile with the Bluetooth device searched out; otherwise, the Bluetooth accessory searches for a Bluetooth device with the next highest connection priority from the pairing list and establishes a connection of a corresponding profile with the Bluetooth device searched out till the Bluetooth accessory searches out the preset number of Bluetooth devices and establishes connections of corresponding profiles with the Bluetooth devices searched out.

Taking Table 1 for example, the Bluetooth accessory predicts the devices to which the user would connect according to the connection times. First, the Bluetooth accessory obtains the device with the maximum connection times (as shown in Table 1, the device is a cellular phone) and searches for this device. If the device is searched out, the Bluetooth accessory determines what type of connection is to be connected with the device according to the type of the device. For example, for the cellular phone, the function mainly is for communications, although the cellular phone simultaneously supports HFP and A2DP, the Bluetooth accessory establishes more HFP connections with the cellular phone than A2DP connections, thus the Bluetooth accessory preferentially establishes an HFP connection with the cellular phone.

After the HFP connection is established, the Bluetooth accessory continues searching for another device which has relatively many connection times and supports other profiles (for example, A2DP). Although the cellular phone supports A2DP, the cellular phone is not in the search range because the Bluetooth accessory has established an HFP connection with the cellular phone. The Bluetooth accessory searches in the devices such as the MP3, the CD player, the Device 1 and the Device 2 to search for the device with the maximum connection times.

According to the rules above, since the Bluetooth accessory establishes more connections with the MP3 than with other devices, the Bluetooth accessory searches for the MP3. If this device is searched out, the Bluetooth accessory establishes a connection of other types (for example, A2DP) with this device. It should be noted that, if the MP3 is the device searched out with the maximum connection times by the Bluetooth accessory in the second search, and the profile corresponding to the MP3 of this connection times is A2DP, since the A2DP has been used to establish a connection by the cellular phone, the Bluetooth accessory can not establish an A2DP connection with the MP3 with the maximum connection times searched out in the second search, but needs to search in the devices with the next level of maximum connection times and takes both the type of the Bluetooth device and the type of the profile as the conditions of judging whether to establish a connection.

In the above, the preset number can be the number of types of profiles simultaneously supported by the Bluetooth device and the Bluetooth accessory. If the Bluetooth accessory has established connections of all profiles supported by the Bluetooth accessory after search, the pairing and connection process is ended. For example, in Table 1, the pairing list includes two types of profiles, namely, HFP and A2DP, the Bluetooth accessory and the Bluetooth device only support these two types of profiles simultaneously, then the pairing and connection process is ended after the Bluetooth accessory establishes connections with the cellular phone and the MP3 respectively after two searches.

As shown in Fig. 5, another embodiment of the present invention provides a Bluetooth accessory for pairing with a Bluetooth device. The Bluetooth accessory includes: a pairing list checking module 401, a connection establishment module 402, a switching module 403, a monitoring module 404 and a response module 405, wherein
the pairing list checking module 401 is configured to check a pairing list stored in a Bluetooth device after the Bluetooth accessory is electrified;
the connection establishment module 402 is configured to search for a preset number of Bluetooth devices from the pairing list according to connection priorities of Bluetooth devices when the pairing list is not empty and establish connections with the Bluetooth devices searched out;
the switching module 403 is configured to enter a discoverable mode, when the pairing list is empty or when the Bluetooth accessory fails in searching out the preset number of Bluetooth devices and establishing connections with the Bluetooth devices searched out;
the monitoring module 404 is configured to monitor, in the discoverable mode, query information from a Bluetooth device other than Bluetooth devices in the pairing list;
the response module 405 is configured to send a response message to the Bluetooth device other than the Bluetooth devices in the pairing list according to the query information, to indicate the connection establishment module 402 to pair and establish a connection with this device;
the connection establishment module 402 is further configured to pair and establish a connection with the Bluetooth device other than the Bluetooth devices in the pairing list according to the response message.

Preferably, the switching module 403 is further configured to, during the process that the connection establishment module 402 searches for the Bluetooth devices from the pairing list, receive a search termination instruction input from external and enter a discoverable mode according to the search termination instruction;
the monitoring module 404 is further configured to monitor, in the discoverable mode, query information from a Bluetooth device other than Bluetooth devices in the pairing list, when the switching module 403 receives the search termination instruction input from the external;
the response module 405 is further configured to, when the switching module 403 receives the search termination instruction input from the external, send a response message to the Bluetooth device other than the Bluetooth devices in the pairing list according to the query information to indicate the connection establishment module 402 to pair and establish a connection with this device;
the connection establishment module 402 is further configured to terminate the search according to the search termination instruction, and pair and establish a connection with the Bluetooth device other than the Bluetooth devices in the pairing list according to the response message.

In this embodiment, if the Bluetooth accessory can not establish a connection with the Bluetooth device (for example, in the case that the pairing list is empty), or the Bluetooth accessory does not establish the preset number of connections (for example, in the pairing list), the Bluetooth accessory enters a discoverable mode to be discovered by other Bluetooth devices for the subsequent pairing and connection. In the discoverable mode, the Bluetooth accessory monitors query information from other Bluetooth devices and responds to the query information of other Bluetooth devices. The response from the Bluetooth accessory to the query information indicates that the Bluetooth accessory can pair and connect with other Bluetooth devices. In this way, a user using the Bluetooth accessory can automatically pair the Bluetooth accessory with a plurality of Bluetooth devices, without executing the tedious manual pairing process.

Preferably, in this embodiment, during the process that the Bluetooth accessory searches for the Bluetooth devices from the pairing list, when the Bluetooth accessory receives a search termination instruction input from external, the Bluetooth accessory terminates the search and enters a discoverable mode to monitor query information from a Bluetooth device other than the Bluetooth devices in the pairing list; and sends a response message to the Bluetooth device other than the Bluetooth devices in the pairing list according to the query information, so as to pair and establish a connection with this Bluetooth device.

Specifically, for example, during the search process performed by the Bluetooth accessory, the user can execute a preset operation (for example, brief key press operation) to terminate the search process and enable the Bluetooth accessory directly enter the discoverable mode. In this way, other Bluetooth devices can connect to the Bluetooth accessory in real time, thereby avoiding the over long delay.

The preset operation can be set according to a specific Bluetooth accessory, that is, since different Bluetooth accessories have different features, the operation modes of interrupting start-up searching are different too. Examples are provided below for different Bluetooth accessories to illustrate the preset operation mode.

For the condition of the Bluetooth accessory being a Bluetooth stereo earphone, the user can (but not limit to) execute the following operations to interrupt the start-up searching process of the Bluetooth accessory. After the Bluetooth stereo earphone is electrified and started, the user can double click a power button of the earphone to execute the operation of interrupting searching.

For the condition of the Bluetooth accessory being a Bluetooth adapter, the user can (but not limit to) execute the following operations to interrupt the start-up searching process of the Bluetooth accessory. An operation menu item is added in matched software corresponding to the Bluetooth adapter, and the start-up searching process can be interrupted by selecting the menu item. After the Bluetooth adapter is electrified, the user can select the menu item to interrupt the start-up searching process.

For the condition of the Bluetooth accessory being a vehicle device, the user can (but not limit to) execute the following operations to interrupt the start-up searching process of the Bluetooth accessory. After the vehicle device is electrified and started, the user briefly presses a specified button on the vehicle device to execute the operation of interrupting searching.

For the condition of the Bluetooth accessory being a speaker system, the user can (but not limit to) execute the following operations to interrupt the start-up searching process of the Bluetooth accessory. After the Bluetooth speaker system is electrified and started, the user briefly presses a specified button on the speaker system to execute the operation of interrupting searching.

The method for the Bluetooth accessory pairing with the Bluetooth device and the Bluetooth accessory provided by the embodiments of the present invention take the number of times of connections between the Bluetooth device and the Bluetooth accessory as the connection priority. After electrified, the Bluetooth accessory searches for a preset number of Bluetooth devices from the pairing list according to the connection priority and establishes connections with the Bluetooth devices searched out. In this way, the Bluetooth accessory can automatically pair with a plurality of Bluetooth devices, thereby improving the usability. Moreover, during the search process performed by the Bluetooth accessory, the Bluetooth accessory can terminate the search at any time according to an external instruction from a user and enter a discoverable mode, so as to pair and establish a connection with a device other than the devices in the pairing list. In this way, the flexibility of pairing is greatly improved and the user experience is improved.

The above are only the preferred embodiments of the present invention and are not intended to limit the patent scope of the present invention. Any equivalent structures or equivalent process modifications made according to the description and the accompanying drawings of the present invention, or any equivalent structures or equivalent process modifications applied in other relevant technical fields directly or indirectly are deemed to be included in the scope of patent protection of the present invention.

## Claims

1. A method for a Bluetooth accessory pairing with a Bluetooth device, **characterized by** comprising:
when a pairing list aiming at Bluetooth devices is not empty, the Bluetooth accessory searching for a preset number of Bluetooth devices from the pairing list according to connection priorities of Bluetooth devices and establishing connections with the preset number of Bluetooth devices searched out.

2. The method according to claim 1, **characterized in that** a connection priority of a Bluetooth device is set based on the number of times of establishing a connection of a corresponding profile by the Bluetooth device and the Bluetooth accessory.

3. The method according to claim 1, **characterized in that** the pairing list at least comprises the type of a Bluetooth device, a profile simultaneously supported by the Bluetooth device and the Bluetooth accessory, and the number of times of establishing a connection of a corresponding profile by the Bluetooth device and the Bluetooth accessory.

4. The method according to any one of claims 1 to 3, **characterized in that** the process of the Bluetooth accessory searching for the preset number of Bluetooth devices from the pairing list according to the connection priorities of the Bluetooth devices and establishing the connections with the preset number of Bluetooth devices searched out comprises:
the Bluetooth accessory searching for a Bluetooth device with maximum connection times from the pairing list and establishing a connection of a corresponding profile with the Bluetooth device with the maximum connection times;
searching for a Bluetooth device with second maximum connection times from the pairing list;
when the Bluetooth device with the second maximum connection times has not established a connection with the Bluetooth accessory and a profile corresponding to the second maximum connection times indicates that no connection has been established, the Bluetooth accessory establishing a connection of the corresponding profile with the Bluetooth device with the second maximum connection times; searching for a Bluetooth device with next maximum connection times from the pairing list and establishing a connection of a corresponding profile with the Bluetooth device searched out till the preset number of Bluetooth devices are searched out.

5. The method according to any one of claims 1 to 3, **characterized in that** the preset number comprises the number of types of profiles simultaneously supported by a Bluetooth device and the Bluetooth accessory, and the preset number is equal to or larger than 2.

6. The method according to any one of claims 1 to 3, **characterized by** further comprising:
when the pairing list is empty or the Bluetooth accessory fails in searching out the preset number of Bluetooth devices for establishing the connections, entering a discoverable mode;
monitoring, in the discoverable mode, query information from a Bluetooth device other than Bluetooth devices in the pairing list;
sending a response message to the Bluetooth device other than the Bluetooth devices in the pairing list according to the query information, to indicate to pair and establish a connection with the Bluetooth device other than the Bluetooth devices in the pairing list.

7. The method according to any one of claims 1 to 3, **characterized by** further comprising:
during the process of the Bluetooth accessory searching for the preset number of Bluetooth devices from the pairing list, when the Bluetooth accessory receives a search termination instruction input from external, the Bluetooth accessory terminating the search, entering a discoverable mode and monitoring query information from a Bluetooth device other than Bluetooth devices in the pairing list;
sending a response message to the Bluetooth device other than the Bluetooth devices in the pairing list according to the query information to pair and establish a connection with the Bluetooth device other than the Bluetooth devices in the pairing list.

8. A Bluetooth accessory for pairing with a Bluetooth device, **characterized in that** the Bluetooth accessory comprises:
a pairing list checking module, configured to check a pairing list stored in a Bluetooth device;
a connection establishment module, configured to, when the pairing list is not empty, search for a preset number of Bluetooth devices from the pairing list according to connection priorities of Bluetooth devices and establish connections with the preset number of Bluetooth devices searched out.

9. The Bluetooth accessory according to claim 8, **characterized in that**
the connection priority of a Bluetooth device is set based on the number of times of establishing a connection of a corresponding profile by the Bluetooth device and the Bluetooth accessory;
the pairing list at least comprises the type of a Bluetooth device, a profile simultaneously supported by the Bluetooth device and the Bluetooth accessory, and the number of times of establishing a connection of a corresponding profile by the Bluetooth device and the Bluetooth accessory.

10. The Bluetooth accessory according to claim 8 or 9, **characterized in that** when searching for the preset number of Bluetooth devices from the pairing list according to the connection priorities of the Bluetooth devices and establishing the connections with the preset number of Bluetooth devices searched out, the connection establishment module is configured to:
search for a Bluetooth device with maximum connection times from the pairing list and establish a connection of a corresponding profile with the Bluetooth device with the maximum connection times; search for a Bluetooth device with second maximum connection times from the pairing list, and establish a connection of a corresponding profile with the Bluetooth device with the second maximum connection times when the Bluetooth device with the second maximum connection times has not established a connection with the Bluetooth accessory and a profile corresponding to the second maximum connection times indicates that no connection has been established; and search a Bluetooth device with next maximum connection times from the pairing list and establish a connection of a corresponding profile with the Bluetooth device searched out till the preset number of Bluetooth devices are searched out.

11. The Bluetooth accessory according to claim 8 or 9, **characterized in that** the Bluetooth accessory further comprises:
a switching module, configured to enter a discoverable mode when the pairing list is empty or the Bluetooth accessory fails in searching out the preset number of Bluetooth devices for establishing the connections;
a monitoring module, configured to monitor, in the discoverable mode, query information from a Bluetooth device other than Bluetooth devices in the pairing list; and
a response module, configured to send a response message to the Bluetooth device other than the Bluetooth devices in the pairing list according to the query information, to indicate the connection establishment module to pair and establish a connection with the Bluetooth device other than the Bluetooth devices in the pairing list; and
the connection establishment module is further configured to pair and establish the connection with the Bluetooth device other than the Bluetooth devices in the pairing list according to the response message.

12. The Bluetooth accessory according to claim 11, **characterized in that**
the switching module is further configured to, during the process that the connection establishment module searches for the preset number of Bluetooth devices from the pairing list, receive a search termination instruction input from external and enter the discover mode according to the search termination instruction;
the monitoring module is further configured to monitor, in the discoverable mode, query information from a Bluetooth device other than the Bluetooth devices in the pairing list, when the switching module receives the search termination instruction input from the external;
the response module is further configured to, when the switching module receives the search termination instruction input from the external, send a response message to the Bluetooth device other than the Bluetooth devices in the pairing list according to the query information to indicate the connection establishment module to pair and establish a connection with the Bluetooth device other than the Bluetooth devices in the pairing list;
the connection establishment module is further configured to terminate the search according to the search termination instruction, and pair and establish the connection with the Bluetooth device other than the Bluetooth devices in the pairing list according to the response message.
